# EUROPÄISCHE PATENTSCHRIFT

(11) **EP 0 557 266 B1**
(45) Veröffentlichungstag und Bekanntmachung des Hinweises auf die Patenterteilung: **18.10.1995**
(21) Anmeldenummer: 93890017.2
(22) Anmeldetag: 15.02.1993
(51) Int. Cl.: B01F 3/04

(54) **Vorrichtung zur Gaseintragung in Flüssigkeiten**
Device for introducing gas in liquids
Dispositif pour introduire du gaz dans des liquides

(30) Priorität: 21.02.1992 AT 325/92
(43) Veröffentlichungstag der Anmeldung: 25.08.1993
(73) Patentinhaber: Heinrich Frings GmbH & Co. KG, D-53115 Bonn (DE)
(72) Erfinder: Ebner, Heinrich, Dipl.-Ing. Dr., A-4020 Linz (AT)
(74) Vertreter: Hübscher, Heiner, Dipl.-Ing.

(56) Entgegenhaltungen:
- FR-A- 666 634
- FR-A- 856 225
- FR-A- 966 026
- US-A- 4 231 863
- US-A- 4 917 832
- PATENT ABSTRACTS OF JAPAN, Band 14, Nr. 202 (C-713)(4145), 25 April 1990

## Beschreibung

Die Erfindung bezieht sich auf eine Vorrichtung zur Gaseintragung in Flüssigkeiten, mit einer im Bodenbereich eines Flüssigkeitsbeckens angeordneten Gaseintragseinrichtung, deren Gaseintragungsbereich sich nur über einen Teil des Bekkenbodens erstreckt.

Bei der Belüftung beispielsweise von Abwasserbecken mit einer im Bodenbereich angeordneten Belüftungseinrichtung, die aufgrund der Beckengröße nur einen Teil des Abwasserbeckens gleichmäßig zu belüften im Stande ist, ergibt sich im Vergleich in einem Behälter, dessen Durchmesser dem Belüftungsbereich der Belüftungseinrichtung entspricht, bei Verteilung der gleichen Luftmenge ein erheblich geringerer Sauerstoffeintrag. Dieser Umstand ist darauf zurückzuführen, daß die Verweilzeit der durch die Belüftungseinrichtung eingetragenen Luftbläschen in der Flüssigkeit von einer Flüssigkeitsumwälzung verringert wird, die in Becken mit einer auf einen Teilbereich des Beckens beschränkten Belüftung auftritt.

Um den Sauerstoffeintrag zu verbessern, könnte die Füllhöhe des Beckens angehoben werden, womit die Verweilzeit der aufsteigenden Luftblasen in der Flüssigkeit verlängert und damit der Sauerstoffeintrag vergrößert wird, doch sind die Möglichkeiten für eine größere Füllhöhe in der Praxis häufig nicht gegeben. Dazu kommt, daß mit zunehmender Füllhöhe der zur Lufteintragung benötigte Kraftbedarf steigt und meist die Luft der Belüftungseinrichtung unter Vordruck zugeführt werden muß.

Der Erfindung liegt somit die Aufgabe zugrunde, eine Vorrichtung zur Gaseintragung in Flüssigkeiten der eingangs geschilderten Art mit einfachen konstruktiven Mitteln so zu verbessern, daß die Gaseintragung in die Flüssigkeit gesteigert und die Gasausnützung erheblich angehoben wird.

Die Erfindung löst die gestellte Aufgabe dadurch, daß oberhalb der Gaseintragseinrichtung eine außerhalb des Gaseintragungsbereiches herrschenden Flüssigkeitsspiegel überragende, zumindest den Hauptbereich der Gaseintragung umschließende Leiteinrichtung vorgesehen ist, die ein Abfließen der innerhalb des umschlossenen Gaseintragungsbereiches durch die Gaseintragung gegenüber dem außerhalb herrschenden Flüssigkeitsspiegel angehobenen Flüssigkeit nach außen wenigstens zum Teil verhindert.

Der Erfindung liegt die Erkenntnis zugrunde, daß die Verweilzeit der in die Flüssigkeit eingetragenen Gasbläschen dann vorteilhaft verlängert werden kann, wenn die durch die eingetragenen Gasbläschen bedingte, nach oben gerichtete Flüssigkeitsströmung eingeschränkt wird. Dies ist der Fall, wenn die durch die Gaseintragung angehobene Flüssigkeit daran gehindert wird, an der Oberfläche nach außen abzufließen, so daß sich im Gaseintragungsbereich ein etwas höherer Flüssigkeitsspiegel als im Bereich außerhalb der Gaseintragung einstellt. Mit einer zumindest den Hauptbereich der Gaseintragung umschließenden Leiteinrichtung, die den außerhalb des Gaseintragungsbereiches herrschenden Flüssigkeitsspiegel überragt, kann diese Wirkung in einfacher Weise erzielt werden. Damit können hinsichtlich der Gaseintragung und der auf die eingebrachte Gasmenge bezogenen Gasausnützung Verhältnisse sichergestellt werden, wie sie sonst nur in Behältern erreichbar sind, über deren Querschnitt eine gleichmäßige Gaseintragung erfolgt.

Die Leiteinrichtung kann unterschiedlich aufgebaut sein. Besonders einfache Konstruktionsverhältnisse ergeben sich, wenn sie aus einem zylinderförmigen Mantelring mit vertikaler Zylinderachse besteht, wobei der Zylinderquerschnitt vorteilhaft an die Grundfläche des Gaseintragungsbereiches bzw. an die Beckenform angepaßt werden kann und keineswegs auf einen kreisförmigen querschnitt beschränkt ist. Grenzt der Gaseintragungsbereich an wenigstens eine Beckenwand an, so kann diese Beckenwand einen Teil der Leiteinrichtung bilden, die dann aus sich zumindest mit einer Beckenwand zu einem geschlossenen Mantel ergänzenden Leitwänden besteht.

Trotz der Abgrenzung des Gaseintragungsbereiches gegenüber dem übrigen Beckenbereich wird der Flüssigkeitsaustausch zwischen diesen Bereichen nicht unterbunden, weil ja die Leiteinrichtung mit Abstand oberhalb der Gaseintragseinrichtung angeordnet ist. Ein solcher Flüssigkeitsaustausch ist auch notwendig, weil in die gesamte Flüssigkeitsmenge des Beckens Gas eingetragen werden soll. Um einen solchen Flüssigkeitsaustausch zu unterstützen, kann die Leiteinrichtung bezüglich des Flüssigkeitsbeckens ausgerichtete Ausflußöffnungen für die von der Leiteinrichtung umschlossene Flüssigkeit aufweisen, so daß die entsprechend begaste Flüssigkeit aus dem Gaseintragungsbereich in einer gerichteten Strömung in das Flüssigkeitsbecken austritt. Diese Austrittsöffnungen können durch Überlaufausnehmungen im oberen Randbereich der Leiteinrichtung gebildet werden oder aus Durchflußöffnungen in der Leiteinrichtung unterhalb des Flüssigkeitsspiegels bestehen, wodurch auf die Flüssigkeitsumwälzung im Becken entsprechend Einfluß genommen werden kann.

Wie bereits ausgeführt wurde, soll das Abfließen einer durch die Gaseintragung angehobenen Flüssigkeitsschicht aus dem von der Leiteinrichtung umschlossenen Gaseintragungsbereich unterbunden werden. Damit diese Aufgabe erfüllt werden kann, muß die Leiteinrichtung einerseits den Flüssigkeitsspiegel außerhalb der Leiteinrichtung überragen und anderseits soweit in die Flüssigkeit eintauchen, daß die durch die Gaseintragung angehobene Flüssigkeit nicht unmittelbar unter der Oberfläche nach außen abfließen kann, sondern zumindest ein kurzes Stück nach unten zurückfließen muß, bevor sie seitlich ausweichen kann. Die hiefür erforderliche Eintauchtiefe der Leiteinrichtung läßt sich durch einen einfachen Versuch festlegen. Beträgt die Eintauchtiefe der Leiteinrichtung wenigstens 10 % der Flüssigkeitshöhe im Flüssigkeitsbecken, so kann den üblichen Verhältnissen vorteilhaft entsprochen werden. Die Eintauchtiefe soll im allgemeinen jedoch 70 % der Flüssigkeitshöhe im Flüssigkeitsbecken nicht übersteigen, um einen ausreichenden Flüssigkeitsaustausch zwischen dem unmittelbar begasten und den nicht unmittelbar begasten Beckenbereichen zu ermöglichen.

Die Leiteinrichtung kann auf dem Beckenboden oder an den Beckenwänden abgestützt werden. Besonders einfache Konstruktionsbedingungen ergeben sich jedoch, wenn die Leiteinrichtung auf Schwimmern abgestützt oder als Schwimmkörper ausgebildet ist, so daß Schwankungen bezüglich der Füllhöhe des Beckens selbsttätig Berücksichtigung finden. Bei einer schwimmenden Leiteinrichtung ist jedoch deren Lage über der Gaseintragseinrichtung festzulegen, um eine Verlagerung der Leiteinrichtung aus dem Gaseintragungsbereich zu verhindern.

In der Zeichnung ist der Erfindungsgegenstand beispielsweise dargestellt. Es zeigen
- Fig. 1: eine erfindungsgemäße Vorrichtung zur Gaseintragung in Flüssigkeiten in einem schematischen Vertikalschnitt durch ein Flüssigkeitsbecken,
- Fig. 2: diese Vorrichtung in einer Draufsicht,
- Fig. 3: eine der Fig. 1 entsprechende Darstellung einer Konstruktionsvariante und
- Fig. 4: die Vorrichtung nach der Fig. 3 in einer Draufsicht.

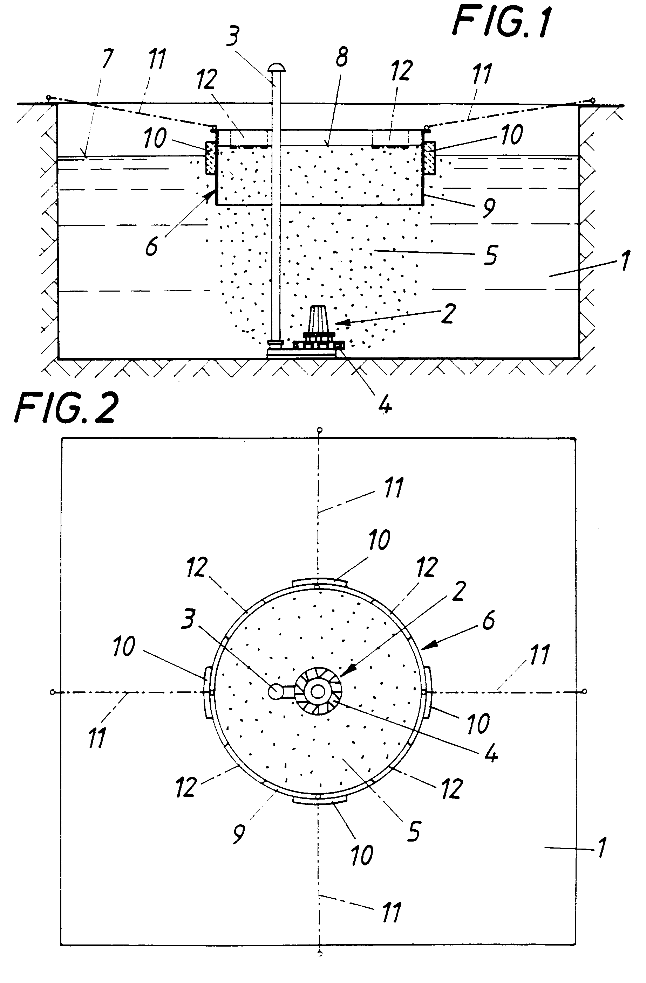

Gemäß dem Ausführungsbeispiel nach den Fig. 1 und 2 ist im Bodenbereich eines Flüssigkeitsbeckens 1 eine Gaseintragseinrichtung 2 in Form eines Tauchbelüfters vorgesehen, der Luft über eine Ansaugleitung 3 ansaugt und zusammen mit ebenfalls angesaugter Flüssigkeit über einen Leitkranz 4 aus Strömungskanälen radial in das Becken 1 ausschleudert. Die sich im Gaseintragungsbereich 5 beim Aufsteigen ausdehnenden Luftbläschen leisten beispielsweise bei einer Belüftungsrate von 800 m³/h, einer Flüssigkeitshöhe von 4 m und einer Flüssigkeitstemperatur von 15° C aufgrund bekannter physikalischer Zusammenhänge eine Arbeit, mit der 3 m³ Wasser je Sekunde 0,26 m angehoben werden können. Diese durch die Luftausdehnung geleistete Arbeit verursacht folglich bei einer angenommenen Grundfläche des Gaseintragungsbereiches von 12 m² eine aufwärts gerichtete Strömungsgeschwindigkeit der Flüssigkeit von 0,25 m/s. Da sich die Luft mit einer Aufstiegsgeschwindigkeit von ca. 0,2 m/s in der Flüssigkeit bewegt, ergibt sich für die Luftgeschwindigkeit gegenüber dem Becken die Summe aus der Strömungsgeschwindigkeit der Flüssigkeit und der Luft von ca. 0,45 m/s. Mit der vorgegebenen Flüssigkeitshöhe von 4 m errechnet sich daraus für die Luft eine Verweilzeit von ca. 9 Sekunden. Kann die durch die Luftausdehnung verursachte Aufwärtsströmung der Flüssigkeit unterbunden werden, so ist hingegen mit einer Verweilzeit der Luft in der Flüssigkeit von ca. 20 Sekunden zu rechnen, womit eine erhebliche Steigerung hinsichtlich des Sauerstoffeintrags verbunden ist.

Auch in einem gleich hoch gefüllten Behälter, dessen gesamter querschnitt gleichmäßig begast wird, bleibt die Flüssigkeit stationär angehoben, ohne daß starke Strömungen nach oben und außen entstehen, so daß auch dort die Verweilzeit der aufsteigenden Gasblasen ca. 20 Sekunden beträgt. Die Gaseintragung ist deshalb auch in diesem Fall wesentlich größer als bei Auftreten einer Flüssigkeitsumwälzung.

Durch eine zumindest den Hauptteil des Gaseintragungsbereiches 5 umschließende Leiteinrichtung 6 kann das Abfließen der durch die Ausdehnungsarbeit der Luftbläschen angehobenen Flüssigkeitsmenge aus dem umschlossenen Oberflächenbereich nach außen verhindert werden, was die sich sonst ausbildende, aufwärts gerichtete Flüssigkeitsströmung im Gaseintragungsbereich 5 mit der Wirkung einschränkt, daß die Verweilzeit der Luftbläschen in der Flüssigkeit verlängert wird. Voraussetzung hiefür ist, daß die Leiteinrichtung 6 den außerhalb des Gaseintragungsbereiches 5 herrschenden Flüssigkeitsspiegel 7 überragt, so daß sich innerhalb der Leiteinrichtung 6 aufgrund der durch die Gaseintragung angehobenen Flüssigkeit ein höherer Flüssigkeitsspiegel 8 einstellen kann.

Die Leiteinrichtung 6 wird gemäß dem Ausführungsbeispiel nach den Fig. 1 und 2 durch einen zylinderförmigen Mantelring 9 mit vertikaler Zylinderachse gebildet, der eine an die Grundfläche des Gaseintragungsbereiches angepaßte kreisförmige Querschnittsform aufweist, die jedoch nicht zwingend erforderlich ist. Der Mantelring 9 ist mit Schwimmern 10 verbunden, die eine stets gleichbleibende Eintauchtiefe für die Leiteinrichtung 6 sicherstellen. Die Lage der Leiteinrichtung gegenüber der Gaseintragseinrichtung 2 wird durch eine Abspannung 11 des Mantelringes 9 gegenüber dem Becken 1 gesichert.

Um in bestimmten, auf die Beckenform abgestellten Richtungen eine Flüssigkeitsströmung zu unterstützen, die einen vorteilhaften Austausch der Flüssigkeit zwischen dem Gaseintragungsbereich 5 und dem Beckenbereich weiter außerhalb dieses Gaseintragungsbereiches mit sich bringt, kann die Leiteinrichtung Ausflußöffnungen 12 aufweisen, wie sie in den Fig. 1 und 2 strichpunktiert angedeutet sind. Diese Ausströmöffnungen 12 sind in Form von Überströmausnehmungen eingezeichnet, die gegen die Ecken des Beckens hin ausgerichtet sind, damit ein vorteilhafter Mischvorgang im Bereich der Beckenecken erreicht wird. An Stelle von Überströmausnehmungen könnten auch Durchtrittsöffnungen unterhalb des Flüssigkeitsspiegels 8 vorgesehen sein.

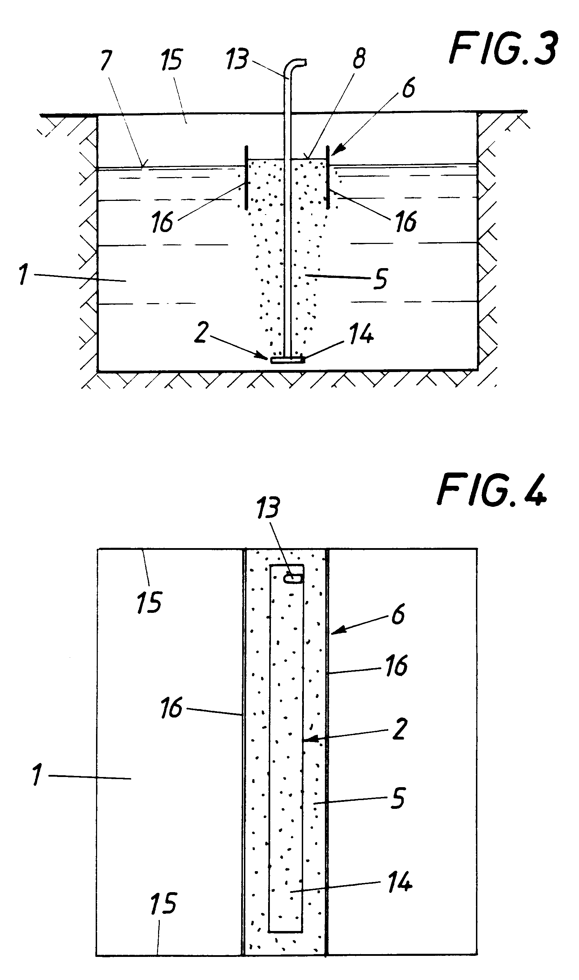

Die Ausführungsform nach den Fig. 3 und 4 unterscheidet sich von dem Ausführungsbeispiel nach den Fig. 1 und 2 zunächst durch die Art der Gaseintragseinrichtung 2, die aus einer an eine Druckluftleitung 13 angeschlossenen, porösen Verteilerplatte 14 besteht. Entsprechend der Rechteckform der Verteilerplatte 14 ergibt sich ein zwischen zwei gegenüberliegenden Beckenwänden 15 erstreckender Gaseintragungsbereich 5, der im Bereich des Flüssigkeitsspiegels wiederum mit einer Leiteinrichtung 6 umschlossen ist, um ein Abfließen der angehobenen Flüssigkeit aus dem umschlossenen Oberflächenbereich zu verhindern. Die Leiteinrichtung 6 schließt in diesem Ausführungsbeispiel die Beckenwände 15 ein, zwischen denen Leitwände 16 angeordnet sind, die sich über die Bekkenwände 15 wiederum zu einem geschlossenen Mantel ergänzen. Da die Leitwände 16 mit den Beckenwänden 15 verbunden sind, erübrigt sich eine gesonderte Halterung für die Leiteinrichtung 6.

Um die Wirkung der erfindungsgemäßen Leiteinrichtungen 6 zu veranschaulichen, wurden in einem Abwasserbecken mit einer Grundfläche von 10 x 10 m und einer Abwasserhöhe von 4 m Messungen mit einem Tauchbelüfter durchgeführt, der 750 m³/l Luft ansaugte und dessen Gaseintragungsbereich sich auf eine kreisförmige Grundfläche mit einem Durchmesser von 4,5 m erstreckte. Wurde koaxial zum Tauchbelüfter eine Leiteinrichtung aus einem kreiszylindrischen 1 m hohen Ringmantel mit 4,5 m Durchmesser so angeordnet, daß keine Flüssigkeit über den Rand der oberen Leiteinrichtung abfließen konnte, so ergab sich innerhalb der Leiteinrichtung ein Flüssigkeitsspiegel, der ca. 20 cm über dem außerhalb der Leiteinrichtung lag. Eine vorschriftsmäßig durchgeführte Sauerstoffeintragsmessung mit außerhalb des Gaseintragunssbereiches angeordneten Elektroden ließ erkennen, daß 53 kg O₂/h eingetragen wurden, was einer Sauerstoffausnützung von 23,7 % entsprach. Nach einer Entfernung der Leiteinrichtung sank der Sauerstoffeintrag auf 30 kg O₂/h und die Sauerstoffausnützung auf 13,4 %. Dabei trat eine starke Flüssigkeitsströmung auf, die an der Oberfläche aus dem Zentrum des Gaseintragungsbereiches über dem Tauchbelüfter radial nach außen führte. Mit einer Leiteinrichtung, bei der vier je ein Meter lange Überlaufausnehmungen im oberen Rand vorgesehen waren, deren Überlaufhöhe 5 cm betrug, konnten bei sonst gleichen Verhältnissen ein Sauerstoffeintrag von 44 kg O₂/h und eine Sauerstoffausnützung von 19,6 % gemessen werden und es wurden an der Oberfläche nur gegen die Ecken des Beckes gerichtete Strömungen sichtbar. Es zeigt sich somit, daß auf den Sauerstoffeintrag und die Sauerstoffausnützung durch eine entsprechende Leiteinrichtung ein erheblicher Einfluß genommen werden kann.

Die Erfindung ist selbstverständlich nicht auf die dargestellten Ausführungsbeispiele beschränkt und kann unabhängig von der Beckenform und -größe und der Art der Gaseintragseinrichtung eingesetzt werden. Mit zunehmender Flüssigkeitshöhe kann es beim Einsatz von Tauchbelüftern notwendig werden, die Luft unter einem Vordruck zuzuführen, um den Kraftbedarf für den Tauchbelüfter zu senken. Außerdem ist die Erfindung nicht auf eine Belüftung von Abwässern beschränkt, sondern kann überall dort mit Erfolg eingesetzt werden, wo es gilt, Gas in eine Flüssigkeit unter der Voraussetzung einzubringen, daß die im Bodenbereich des Flüssigkeitsbehälters angeordnete Gaseintragseinrichtung nicht für eine gleichmäßige Belüftung über den gesamten Behälterquerschnitt sorgen kann.

## Patentansprüche

1. Vorrichtung zur Gaseintragung in Flüssigkeiten, mit einer im Bodenbereich eines Flüssigkeitsbeckens (1) angeordneten Gaseintragseinrichtung (2), deren Gaseintragungsbereich (5) sich nur über einen Teil des Beckenbodens erstreckt, dadurch gekennzeichnet, daß oberhalb der Gaseintragseinrichtung (2) eine den außerhalb des Gaseintragsbereiches (5) herrschenden Flüssigkeitsspiegel (7) überragende, zumindest den Hauptbereich der Gaseintragung umschließende Leiteinrichtung (6) vorgesehen ist, die ein Abfließen der innerhalb des umschlossenen Gaseintragungsbereiches (5) durch die Gaseintragung gegenüber dem außerhalb herrschenden Flüssigkeitsspiegel (7) angehobenen Flüssigkeit nach außen wenigstens zum Teil verhindert.

2. Vorrichtung nach Anspruch 1, dadurch gekennzeichnet, daß die Leiteinrichtung (6) aus einem zylinderförmigen Mantelring (9) mit vertikaler Zylinderachse besteht.

3. Vorrichtung nach Anspruch 1, dadurch gekennzeichnet, daß die Leiteinrichtung (6) aus sich zumindest mit einer Beckenwand (15) zu einem geschlossenen Mantel ergänzenden Leitwänden (16) besteht.

4. Vorrichtung nach einem der Ansprüche 1 bis 3, dadurch gekennzeichnet, daß die Leiteinrichtung (6) bezüglich des Flüssigkeitsbeckens (1) ausgerichtete Ausflußöffnungen (12) für die von der Leiteinrichtung (6) umschlossene Flüssigkeit aufweist.

5. Vorrichtung nach einem der Ansprüche 1 bis 4, dadurch gekennzeichnet, daß die Eintauchtiefe der Leiteinrichtung (6) wenigstens 10 % der Flüssigkeitshöhe im Flüssigkeitsbecken (1) beträgt.

6. Vorrichtung nach einem der Ansprüche 1 bis 5, dadurch gekennzeichnet, daß die Eintauchtiefe der Leiteinrichtung (6) höchstens 70 % der Flüssigkeitshöhe im Flüssigkeitsbekken (1) beträgt.

7. Vorrichtung nach einem der Ansprüche 1 bis 6, dadurch gekennzeichnet, daß die Leiteinrichtung (6) auf Schwimmern (10) abgestützt oder als Schwimmkörper ausgebildet ist.

## Claims

1. A device for introducing gas into liquids, comprising a gas introduction device (2) disposed in the bottom zone of a liquid basin (1), the gas introduction zone (5) of the device (2) extending over only part of the basin base, characterised in that a guide device (6) is provided above the gas introduction device (2) and projects beyond the liquid level (7) outside the gas introduction zone (5) and encloses at least the main gas introduction zone, said guide device (6) at least partially preventing the external outflow of the liquid which, as a result of the gas introduction, has been raised inside the enclosed gas introduction zone (5) relatively to the liquid level (7) outside.

2. A device according to claim 1, characterised in that the guide device (6) consists of a cylindrical jacket ring (9) with the cylinder axis vertical.

3. A device according to claim 1, characterised in that the guide device (6) consists of baffles (16) which cooperate at least with one basin wall (15) to form a closed jacket.

4. A device according to any one of claims 1 to 3, characterised in that the guide device (6) has outflow apertures (12) for the liquid enclosed by the guide device (6), said apertures being aligned with respect to the liquid basin (1).

5. A device according to any one of claims 1 to 4, characterised in that the depth of immersion of the guide device (6) is at least 10% of the level of the liquid in the liquid basin (1).

6. A device according to any one of claims 1 to 5, characterised in that the depth of the immersion of the guide device (6) is no more than 70% of the level of the liquid in the liquid basin (1).

7. A device according to any one of claims 1 to 6, characterised in that the guide device (6) is supported on floats (10) or is constructed as a floating member.

## Revendications

1. Dispositif pour introduire des gaz dans des liquides, avec un dispositif d'introduction de gaz (2) disposé dans la zone de fond d'un bassin à liquide (1) et dont la zone d'introduction de gaz (5) s'étend seulement sur une partie du fond de bassin,
caractérisé en ce qu'au dessus du dispositif d'introduction de gaz (2) est prévu un dispositif de guidage (6) dépassant du niveau de liquide (7) s'établissant à l'extérieur de la zone d'introduction de gaz (5) et entourant au moins la zone principale de l'introduction de gaz, empêchant au moins en partie tout écoulement vers l'extérieur du liquide soulevé par l'introduction de gaz, dans les limites de la zone d'introduction de gaz (5) enclose, vis-à-vis du niveau de liquide (7) établi à l'extérieur.

2. Dispositif selon la revendication 1,
caractérisé en ce que le dispositif dé guidage (6) est constitué d'un anneau-enveloppe (9) cylindrique à axe de cylindre vertical.

3. Dispositif selon la revendication 1,
caractérisé en ce que le dispositif de guidage (6) est constitué de parois de guidage (16) se complétant, au moins
avec une paroi de bassin (15), pour former une enveloppe fermée.

4. Dispositif selon l'une des revendications 1 à 3,
caractérisé en ce que le dispositif de guidage (6) présente des ouvertures d'évacuation d'écoulement (12), orientées par rapport au bassin à liquide (1) et destinées au liquide entouré par le dispositif de guidage (6).

5. Dispositif selon l'une des revendications 1 à 4,
caractérisé en ce que la profondeur d'immersion du dispositif de guidage (6) est d'au moins 10 % de la hauteur du liquide dans le bassin à liquide (1).

6. Dispositif selon l'une des revendications 1 à 5,
caractérisé en ce que la profondeur d'immersion du dispositif de guidage (6) est au maximum de 70 % de la hauteur du liquide dans le bassin à liquide (1).

7. Dispositif selon l'une des revendications 1 à 6,
caractérisé en ce que le dispositif de guidage (6) est soutenu sur des flotteurs (10) ou bien réalisé sous forme de corps flottant.
